(19) **Europäisches Patentamt European Patent Office Office européen des brevets**

(11) **EP 4 561 042 B1**

(12) **FASCICULE DE BREVET EUROPEEN**

(45) Date de publication et mention de la délivrance du brevet:
**04.03.2026 Bulletin 2026/10**

(21) Numéro de dépôt: **24215850.9**

(22) Date de dépôt: **27.11.2024**

(51) Classification Internationale des Brevets (IPC):
**H04M 3/14** *(2006.01)* **H04M 3/28** *(2006.01)*

(52) Classification Coopérative des Brevets (CPC):
**H04M 3/14; H04M 3/28;** H04M 2201/14

(54) **TEST D'UNE INTERFACE DE COMMUNICATION CONNECTÉE À UNE LIGNE TÉLÉPHONIQUE ANALOGIQUE**

TESTEN EINER AN EINE ANALOGE FERNSPRECHLEITUNG ANGESCHLOSSENEN KOMMUNIKATIONSSCHNITTSTELLE

TESTING A COMMUNICATION INTERFACE CONNECTED TO AN ANALOG TELEPHONE LINE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **27.11.2023 FR 2313089**

(43) Date de publication de la demande:
**28.05.2025 Bulletin 2025/22**

(73) Titulaire: **SAGEMCOM BROADBAND SAS 92270 Bois-Colombes (FR)**

(72) Inventeurs:
• **CAPDEVIELLE-FIDEL, Laurent 92270 BOIS-COLOMBES (FR)**
• **MEUNIER, Brice 92270 BOIS-COLOMBES (FR)**

(74) Mandataire: **Regimbeau 20, rue de Chazelles 75847 Paris Cedex 17 (FR)**

(56) Documents cités:
**US-A1- 2009 034 690 US-B1- 6 438 212**

**Description**

**DOMAINE DE L'INVENTION**

La présente divulgation concerne notamment un procédé de test d'une interface de communication connectée à une ligne téléphonique analogique.

**ETAT DE LA TECHNIQUE**

Un composant utilisé comme interface de communication entre un réseau téléphonique analogique et un réseau numérique donnant accès par exemple à un service de voix sur IP (Voice Over Internet Protocol) est le port FXS (Foreign exchange subscriber).

Un port FXS peut prendre les deux états :

- un état dit « décroché » lorsque le port FXS estime être relié via une ligne téléphonique analogique à un appareil téléphonique décroché (autrement dit, lorsque le port FXS estime que la ligne téléphonique analogique est occupée), et
- un état dit « raccroché » le port FXS estime n'être relié à aucun appareil téléphonique décroché (autrement dit, lorsque le port FXS estime que la ligne téléphonique analogique n'est pas occupée).

Le port FXS peut se déclarer dans l'état décroché pour différentes raisons : en raison d'un dysfonctionnement du port FXS, en raison d'un problème de raccordement du port FXS au réseau téléphonique analogique, ou parce que la ligne téléphonique analogique est véritablement occupée, soit par un appel en cours ou soit parce qu'un utilisateur a volontairement décroché son téléphone pour ne pas être dérangé.

Pour discriminer ces différents cas, il est connu de commander au port FXS la mise en œuvre de tests sur la ligne téléphonique qui sont définis dans la norme connue de l'homme du métier sous le nom GR-909 (le nom de la spécification décrivant le contenu de cette norme est « GR909-CORE : Generic Criteria for Fiber in the Loop Systems »).

Toutefois, ces tests ne sont pas toujours précis.

D'autre tests ont été proposé dans les documents US2009/034690A1 et US6438212B1, mais ceux-ci ont pour inconvénient de requérir un appareillage externe ainsi que l'intervention d'un utilisateur.

**EXPOSE DE L'INVENTION**

Un but de l'invention est de tester une interface de communication avec un réseau téléphonique analogique précise et ne requérant pas d'appareillage externe.

Il est à cet effet proposé, selon un premier aspect, un procédé de test d'une interface de communication connectée à une ligne téléphonique analogique comprenant deux fils électriques, le procédé comprenant les étapes suivantes :

- détection d'un changement d'état de l'interface de communication entre un état décroché et un état raccroché ;
- s'il est détecté que le changement d'état va de l'état raccroché à l'état décroché, collecte de mesures acquises par l'interface de communication, les mesures se rapportant à au moins une des grandeurs physiques suivantes :

  ○ une tension fournie par un convertisseur de l'interface de communication,
  ○ une tension entre les deux fils électriques,
  ○ une intensité d'un courant de boucle circulant l'un des deux fils électriques,
  ○ une intensité d'un courant de fuite depuis l'un des deux fils électriques vers une masse de l'interface de communication ;

- vérification de correspondance des mesures avec des valeurs nominales respectives;
- si la vérification révèle que toutes les mesures ont des valeurs nominales, mise en oeuvre d'un traitement comprenant les étapes suivantes:

  ○ détection d'un maintien de l'état de l'interface de communication pendant un durée prédéfinie ;
  ○ s'il est détecté que l'interface de communication se maintient à l'état décroché pendant la durée prédéfinie, commande d'un test complémentaire sur la ligne téléphonique par l'interface de communication, de sorte à collecter des données de diagnostic complémentaires aux mesures;
  ○ si les données de diagnostic complémentaires révèlent un défaut dans le réseau téléphonique analogique, émission d'une alarme ;
◦ si les données de diagnostic complémentaires ne révèlent pas de défaut sur la ligne téléphonique analogique, répétition du traitement.

Le procédé peut également comprendre les caractéristiques optionnelles suivantes, prises seules ou combinées entre elles à chaque fois que cela est possible techniquement.

Optionnellement, le procédé comprend les étapes suivantes : si la vérification des mesures révèle qu'au moins une mesure parmi la tension entre les deux fils électriques, l'intensité du courant de boucle et l'intensité du courant de fuite n'a pas une valeur nominale, commande du test complémentaire sur la ligne téléphonique par l'interface de communication, de sorte à obtenir les données de diagnostic complémentaires aux mesures, et émission de l'alarme si les données de diagnostic révèlent un défaut dans le réseau téléphonique analogique.

Optionnellement, le procédé comprend les étapes suivantes :

- si la vérification des mesures révèle que la tension fournie n'a pas une valeur nominale, commande de redémarrage du convertisseur de l'interface de communication ;
- si la vérification de la tension fournie a une valeur nominale, vérification de correspondance avec des valeurs nominales respectives d'au moins une mesure les mesures se rapportant à au moins une des grandeurs physiques suivantes:

    ◦ la tension entre les deux fils électriques,
    ◦ l'intensité du courant de boucle,
    ◦ l'intensité du courant de fuite.

Optionnellement, le procédé comprend les étapes suivantes mises en œuvre si est détecté que le changement d'état va de l'état décroché à l'état raccroché ou si l'interface de communication se maintient dans l'état raccroché,

- collecte d'une tension entre les deux fils électriques acquise par l'interface de communication ;
- vérification de la tension collectée, de sorte à déterminer si la tension collectée a une valeur nominale ;
- si la tension a une valeur nominale, mise en œuvre du traitement ;
- si la tension n'a pas une valeur nominale, accès à une information mémorisée par l'interface de communication, l'information indiquant si l'interface de communication a reçu une commande d'alimentation électrique de la ligne téléphonique analogique ou non ;
- si l'information indique que l'interface de communication n'a pas reçu de commande d'alimentation, alors commande de l'interface de communication de sorte que l'interface de communication alimente la ligne téléphonique analogique ;
- si l'information indique que l'interface de communication a reçu une commande d'alimentation, commande de redémarrage du convertisseur.

Optionnellement, le procédé comprend en outre les étapes suivantes mises en œuvre après la commande de l'interface de communication de sorte que l'interface de communication alimente la ligne téléphonique analogique :

- collecte de nouvelles mesures acquises par l'interface de communication, les nouvelles mesures se rapportant à au moins une des grandeurs physiques ;
- vérification de correspondance des nouvelles mesures avec les valeurs nominales respectives ;
- si la vérification de correspondance des nouvelles mesures révèle que toutes les nouvelles mesures ont des valeurs nominales, mise en œuvre du traitement ;
- la vérification de correspondance des nouvelles mesures révèle qu'au moins une des nouvelles mesures n'a pas une valeur nominale, commande de redémarrage du convertisseur.

Optionnellement, le procédé comprend en outre les étapes suivantes mises en œuvre après la commande de redémarrage du convertisseur :

- répétition des étapes de collecte et de vérification de nouvelles mesures ;
- si la répétition des étapes de collecte et de vérification de nouvelles mesures révèle que toutes les nouvelles mesures ont des valeurs nominales, mise en œuvre du traitement ;
- si la répétition révèle qu'une nouvelle mesure n'a pas une valeur nominale, commande de réinitialisation matérielle de l'interface de communication.

Optionnellement, le procédé comprend en outre les étapes suivantes mises en œuvre après la commande de réinitialisation matérielle de l'interface de communication :

- deuxième répétition des étapes de collecte et de vérification de nouvelles mesures ;
- si la deuxième répétition révèle que toutes les nouvelles mesures ont des valeurs nominales, mise en œuvre du traitement ;
- si la deuxième répétition révèle qu'une nouvelle mesure n'a pas une valeurs nominale, émission d'une alarme.

Optionnellement, le test complémentaire comprend au moins un test défini par la norme GR-909.

Un second aspect de la présente divulgation est un produit programme d'ordinateur comprenant des instructions de code de programme pour l'exécution des étapes du procédé ci-dessus, lorsque ce programme est exécuté par un processeur.

Un troisième aspect de la présente divulgation est un dispositif, par exemple une passerelle d'accès à internet, comprenant :

- une interface de communication propre à être connectée à une ligne téléphonique analogique comprenant deux fils électriques ;
- un processeur configuré pour tester l'interface de communication à l'aide du procédé décrit ci-dessus.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

La figure 1 illustre de façon schématique un dispositif 1 selon un premier mode de réalisation de l'invention.

La figure 2 montre des valeurs de tensions censées être utilisées par un port FXS dans un état décroché et dans un état raccroché.

La figure 3, la figure 4 et la figure 5 sont des organigrammes d'étapes d'un procédé selon un mode de réalisation.

Sur l'ensemble des figures, les éléments similaires portent des références identiques.

## DESCRIPTION DETAILLEE DE L'INVENTION

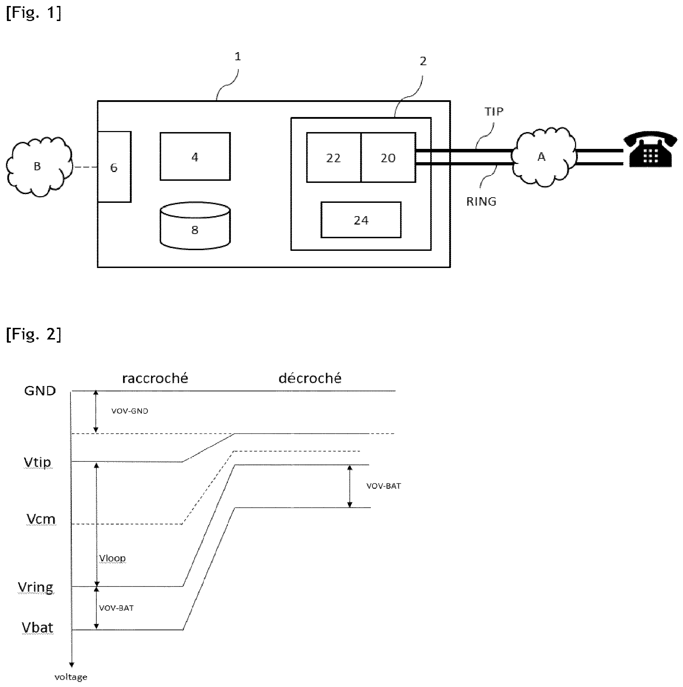

En référence à la **figure 1,** un dispositif 1, tel qu'une passerelle internet, comprend une première interface de communication 2 avec un réseau téléphonique analogique A, un processeur 4, et une deuxième interface de communication 6 avec un réseau numérique B, par exemple un réseau WAN (Wide Area Network).

Dans la suite de la présence divulgation, on considérera un mode de réalisation non limitatif dans lequel la première interface de communication 2 avec le réseau téléphonique analogique est, ou comprend, un port FXS (Foreign exchange subscriber).

Le port FXS est propre à être relié à un téléphone analogique via une ligne de communication analogique comprenant deux fils électriques conventionnellement appelés TIP et RING.

Une fonction assurée par le port FXS est d'assurer le bon fonctionnement du téléphone analogique connecté, de transmettre et recevoir la signalisation nécessaire à la réalisation d'une communication analogique (alimentation en tension et courant de la ligne téléphonique, signal de sonnerie lors d'un appel entrant, état de la boucle).

La ligne de communication électrique peut ainsi comprend un câble propre à être raccordé de manière amovible au dispositif 1 et au téléphone analogique. Ce câble peut comprendre par exemple un connecteur RJ11.

Le port FXS comprend une interface de ligne 20, ou LIF, comprenant deux contacts électriques propres à être électriquement reliés respectivement au premier fil électrique et au deuxième fil électrique de la ligne téléphonique analogique.

Le port FXS comprend par ailleurs un circuit d'interface de ligne d'abonné 22, ou circuit SLIC (Subscriber Line Interface Circuit). Le circuit SLIC est configuré pour réaliser certains traitements, par exemple une conversion audio entre un signal analogique venant du téléphone analogique et le réseau numérique raccordé à la passerelle. D'autres traitements (gains, transcodage, annulation d'écho) peuvent également être réalisés par le circuit SLIC ou par le processeur 4.

Le port FXS comprend en outre un convertisseur 24 configuré pour alimenter électriquement les autres composants du port FXS (SLIC, LIF) ainsi que la ligne de communication analogique, et le téléphone analogique qui y est éventuellement connecté. Le convertisseur 24 est un convertisseur DCDC, c'est-à-dire qu'il fournit à la ligne de communication analogique un courant continu de sortie à la ligne de communication analogique à partir d'un courant électrique continue d'entrée qu'il reçoit, et qui est d'intensité différente. Le courant électrique d'entrée émane d'une source de courant électrique externe au dispositif 1.

Le convertisseur 24 est capable de générer différentes tensions en fonction du mode de fonctionnement du port FXS. Ces tensions sont par exemple supérieures à la tension d'alimentation générale de la passerelle fournie par la source externe (12 Volts en France).

De manière connue en soi, un téléphone analogique est susceptible d'être dans un état décroché (Off-Hook) ou dans un état raccroché (On-Hook). Ces noms d'état font référence au fait qu'un téléphone analogique peut comprendre une base et un combiné téléphonique comprenant un haut-parleur et un micro, le combiné téléphonique étant susceptible d'être décroché de la base ou y être raccroché.

Lorsque le téléphone analogique est dans l'état décroché, le téléphone analogique établit une communication avec le port FXS de manière exclusive. Le téléphone reçoit alors du courant électrique via l'un des deux fils électriques de la ligne téléphonique et retransmet le courant électrique reçu via l'autre fil électrique de la ligne, formant ainsi une boucle de courant. On dit alors conventionnellement que la ligne téléphonique est « occupée » par le téléphone analogique. Un utilisateur du téléphone est averti de l'état décroché par une tonalité. L'utilisateur peut ensuite composer un numéro de téléphone pour établir une communication téléphonique avec un destinataire.

Lorsque le téléphone analogique est dans l'état raccroché, aucune communication n'est établie avec le port FXS. Aucun courant ne circule dans les deux fils électriques de la ligne téléphonique analogique.

On a représenté sur la figure 2 les valeurs de tensions censées être utilisées dans l'état décroché et dans l'état raccroché. Ces tensions sont négatives par rapport à la masse du port FXS. Ces tensions sont les suivantes :

- GND : le référentiel de masse,
- Vbat : tension fournie par le convertisseur,
- Vring : tension entre le fil électrique RING et la masse,
- Vtip : tension entre le fil électrique TIP et la masse,
- Vloop : tension entre les deux fils électrique TIP et RING,
- VOV_GND et VOV_BAT : tensions prédéfinies d'offset permettant la transmission de signaux audios,
- Vcm : tension de référence arbitraire, égale à (Vtip+Vring)/2.

Le port FXS comprend une mémoire configurée pour mémoriser différentes mesures relatives à la ligne téléphonique analogique. Cette mémoire est par exemple incluse dans le circuit SLIC 22. Ces mesures comprennent les tensions précitées et représentées sur la figure 2, ainsi l'intensité des courants suivants :

- Iloop : intensité du courant circulant dans les fils électrique TIP et RING dans deux sens opposés, et l'on va appeler « courant de boucle » dans la présente divulgation,
- Ilong : intensité d'un courant de fuite depuis le fil électrique TIP ou RING vers la masse.

Le port FXS comprend un appareil de mesure interne adapté pour mesurer les tensions et les intensités de courant précités, et mettre à jour régulièrement les informations stockées dans la mémoire par exemple périodiquement, de sorte que les mesures stockées dans ces registres à un instant donné s'efforcent de refléter l'état de la ligne téléphonique analogique à cet instant donné.

La mémoire comprend par exemple des registres de 32 bits, chaque registre stockant l'une des mesures précitées.

Par exemple, le bit de poids faible d'un registre de la mémoire pour une tension vaut $931{,}323^{-9}$ Volt. Par exemple, le bit de poids faible d'un registre de la mémoire pour un courant vaut $1{,}676^{-9}$ Ampère.

La mémoire est également configurée pour stocker un booléen estimant si le port FXS est dans un état décroché ou dans un état raccroché (la valeur de ce booléen est automatiquement ajustée par le circuit SLIC). Cette information indique que :

- le port FXS est dans l'état décroché lorsque le port FXS estime être relié via la ligne téléphonique analogique à un appareil téléphonique décroché (autrement dit, lorsque le port FXS estime que la ligne téléphonique analogique est occupée), et que
- le port FXS est dans l'état raccroché lorsque le port FXS estime n'être relié à aucun appareil téléphonique décroché (autrement dit, lorsque le port FXS estime que la ligne téléphonique analogique n'est pas occupée).

En pratique, ce booléen peut être codé sur un seul bit.

Le processeur 4 est configuré pour exécuter un programme d'ordinateur réalisant diverses fonctionnalités, notamment commander le fonctionnement du port FXS. Pour cela, le programme comprend ou est combiné à un pilote dédié du port FXS, ce pilote comprenant différentes fonctions de code.

Certaines fonctions de code du pilote passent au port FXS des commandes demandant au port FXS de réaliser des tests sur la ligne téléphonique analogique, par exemple des tests définis dans la norme GR-909 cité dans l'introduction de la présente divulgation. Ces tests sont exposés dans les parties 12.4.6 (Interface to Embedded Loop Testing Systems) et 12.4.7 (Generic Testing Interface) de la spécification de la norme GR-909.

D'autres fonctions de code du pilote permettent d'accéder en lecture aux informations mémorisées dans la mémoire du port FXS.

Le programme d'ordinateur est lui-même stocké dans une mémoire 8 du dispositif 1, externe au port FXS.

On va maintenant décrire un procédé de test du port FXS mis en œuvre par le processeur 4, lorsque ce processeur 4 exécute le programme d'ordinateur précité.

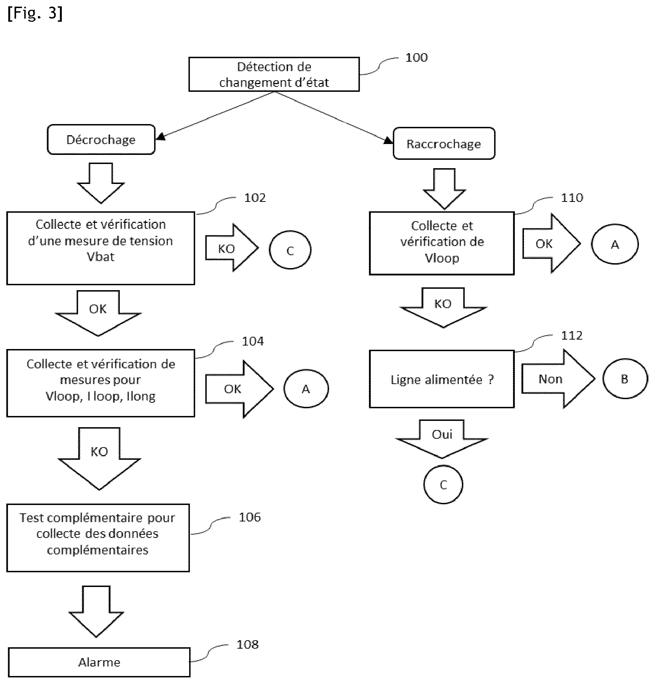

En référence à la figure 3, le processeur 4 détecte dans une étape 100 un changement de l'état du port FXS. Il existe deux changements d'états possibles : un décrochage (le port FXS passe de l'état raccroché à l'état décroché) ou un raccrochage (le port FXS passe de l'état décroché à l'état raccroché).

Cette étape de détection 100 peut être réalisée par exemple en accédant en lecture au registre de la mémoire du port FXS stockant le booléen indicatif de son état, et ce de manière répétée dans le temps, par exemple de manière périodique. Une lecture d'un zéro suivi d'un 1 ou d'un 1 suivi d'un zéro reflète un changement d'état.

Si le processeur 4 détecte un décrochage, alors le processeur 4 collecte des mesures acquises par le port FXS, en accédant en lecture aux registres correspondants de la mémoire du port FXS. Les mesures se rapportent à au moins une des grandeurs physiques suivantes :

- la tension Vbat fournie par le convertisseur,
- la tension Vloop entre les deux fils électrique,
- l'intensité Iloop du courant de boucle circulant dans le premier fil électrique ou dans le deuxième fil électrique,
- l'intensité Ilong du courant de fuite.

Pour chaque mesure de grandeur physique collectée, le processeur 4 vérifie une correspondance entre la mesure collectée et une valeur nominale de la grandeur physique. Une valeur nominale est une valeur attendue pour la grandeur physique considérée, reflétant un fonctionnement normal.

Le processeur 4 peut vérifier une telle correspondance en comparant la mesure avec la valeur nominale, cette dernière ayant été mémorisée par le dispositif 1 au préalable. S'il est constaté que l'écart entre la mesure et la valeur nominale mémorisée est inférieure à un seuil (le seuil pouvant être égal à zéro ou différent de zéro pour refléter une marge de tolérance), alors il est considéré que la mesure correspond à une valeur nominale. S'il est constaté que cet écart est supérieur au seuil, il est considéré que la mesure ne correspond pas une valeur nominale.

Alternativement, le processeur 4 peut vérifier une telle correspondance en comparant la mesure avec une valeur anormale mémorisée par le dispositif 1 au préalable (cette valeur est dite anormale car elle représente une situation anormale). S'il est constaté que l'écart entre une mesure et la valeur anormale mémorisée est inférieur à un seuil (le seuil pouvant être égal à zéro ou différent de zéro pour refléter une marge de tolérance), alors il est considéré que la mesure ne correspond pas à une valeur nominale. S'il est constaté que cet écart est supérieur au seuil, il est considéré que la mesure correspond à une valeur nominale.

Si la vérification des mesures révèle que toutes les mesures correspondent à des valeurs nominales, alors la situation est considérée comme normale, et le processeur 4 met en œuvre un traitement de test cyclique qui est représenté sur la figure 3 par le bloc A. Ce traitement de test cyclique sera détaillé plus loin.

Préférentiellement, les mesures sont vérifiées en en deux étapes successives de vérification 102 et 104.

Dans la première étape de vérification 102, le processeur 4 vérifie si la tension Vbat mesurée correspond à une valeur de tension nominale non-nulle mémorisée par le dispositif 1. Le processeur 4 peut par exemple utiliser une marge de tolérance, par exemple de 5%.

Si la tension Vbat mesurée ne correspond pas à la valeur nominale (c'est-à-dire l'écart entre Vbat et la valeur nominale est supérieur à la marge de tolérance), alors le procédé passe au bloc B. Le bloc B est représentatif d'un cas d'erreur qui déclenche la mise en œuvre de certaines étapes du procédé qui seront décrites plus loin.

Si au contraire la tension Vbat mesurée correspond à la valeur nominale, alors le processeur 4 passe à la deuxième étape de vérification 104, au cours de laquelle le processeur 4 vérifie si les autres mesures collectées (Vloop, Iloop, Ilong) correspondent à des valeurs nominales.

Une valeur anormale pour la tension Vloop est une valeur nulle. En effet, une telle valeur nulle reflèterait un court-circuit entre le premier fil électrique et le deuxième fil électrique. Dans ces conditions, le processeur 4 considère que la tension Vloop mesurée est nominale si et seulement si la tension Vloop est en valeur absolue supérieur à un seuil constituant la marge de tolérance choisie (égal à zéro ou proche de zéro).

Une valeur nominale pour l'intensité Iloop du courant de boucle est une valeur non-nulle Iref prédéfinie mémorisée par le dispositif 1. Dans ces conditions, le processeur 4 considère que l'intensité Iloop mesurée est nominale si et seulement si un écart entre Iloop et cette valeur non-nulle prédéfinie est inférieure à un seuil constituant la marge de tolérance choisie (égal à zéro ou proche de zéro). Sinon, un défaut de résistance survient probablement.

Une valeur nominale pour l'intension Ilong du courant de fuite est une valeur nulle. En effet, une valeur non nulle refléterait une fuite de courant depuis la ligne téléphonique analogique vers la masse. Dans ces conditions, le processeur 4 considère que l'intensité Iloop mesurée est nominale si et seulement Iloop est en valeur absolue inférieur un seuil constituant la marge de tolérance choisie (égal à zéro ou proche de zéro).

En définitive, les mesures Vloop, Iloop et Ilong correspondent à des valeurs nominales si les relations suivantes sont toutes respectées, à une marge de tolérance près :

$$Vloop = 0$$

$$Iloop \neq Iref$$

$$Ilong = 0$$

Comme indiqué précédemment, le procédé passe au bloc A si toutes ces relations sont respectées.

Si au contraire au moins une des relations suivantes n'est pas respectée, autrement si au moins une des mesures Vloop, Iloop et Ilong ne correspond pas à une valeur nominale, alors le processeur 4 commande, dans une étape 106, la mise en œuvre par le port FXS d'un test complémentaire de la ligne téléphonique, de sorte à collecter des données de diagnostic complémentaires aux mesures.

Le test complémentaire comprend au moins un des tests suivants, définis par la norme GR-909.

|  | Nom du test GR-909 traduit en français | Nom du test en langue originale (anglais) | Donnée(s) complémentaire(s) collectées |
|---|---|---|---|
| #1 | Test de potentiel dangereux et de force motrice électrique étrangère | Hazardous Potential and Foreign Electrical Motive Force test | Tension résiduelle mesurée entre les fils TIP et RING<br>Tension résiduelle mesurée entre le fil TIP et la masse<br>Tension résiduelle mesurée entre le fil RING et la masse |
| #2 | Test de défauts résistifs | Resistive Faults Test | Impédance mesurée entre les fils TIP et RING<br>Impédance mesurée entre le fil TIP et la masse<br>Impédance mesurée entre le fil RING et la masse |
| #3 | Test de décro-chage de récep-teur | Receiver Off Hook test | Test d'impédance spécifique: un poste décroché présente une impédance variable suivant la tension entre les fils TIP et RING |

Par exemple, le test complémentaire peut comprendre d'abord les tests #1 et #2, et ne comprendre le test #3 que si les tests #1 et #2 ne révèlent pas de défaut. Le test #3 est en réalité un test de cohérence d'impédance permettent de vérifier la présence d'un téléphone analogique décroché. Ce test est capable de faire la différence entre un téléphone décroché et une impédance de valeur similaire.

Les tests #1, #2 et #3 peuvent être réalisés dans n'importe quel ordre. Par exemple, le test complémentaire peut comprendre d'abord le test #3 puis les tests #1 et #2.

Une fois ces données complémentaires collectées, le processeur 4 émet une alarme (étape 108).

Cette alarme peut être communiquée à un utilisateur du dispositif 1, par exemple sous la forme d'un message affiché sur un écran d'affichage du dispositif 1. En variante ou en complément, l'alarme est transmise à un serveur de maintenance via la première interface de communication. De la sorte, l'utilisateur et/ou l'organisme de maintenance du dispositif 1 est informé de l'existence d'un dysfonctionnement du réseau téléphonique analogique. Les données complémentaires collectées caractérisent et quantifient ce dysfonctionnement. Ces données complémentaires peuvent en effet indiquer le lieu du dysfonctionnement (au niveau du port FXS, au niveau du téléphone analogique, ou bien au niveau de la ligne téléphonique analogique) et/ou quantifier le dysfonctionnement (par exemple via les mesures d'impédance collectées).

Jusqu'à présent, on a décrit des étapes réalisées par le processeur 4 lorsqu'un décrochage est détecté.

Lorsque le processeur 4 détecte au contraire un raccrochage (passage de l'état du port FXS de l'état décroché à l'état raccroché), le processeur 4 met en œuvre les étapes suivantes.

Dans une étape 110, le processeur 4 collecte la tension Vloop mesurée par le port FXS, et vérifie si cette tension Vloop est nominale (conformément à la règle décrite précédemment). Si oui, la situation est normale, et le procédé passe au bloc A. Sinon, le processe met en œuvre l'étape 112.

Dans l'étape 112, le processeur 4 accède à une information mémorisée dans la mémoire du port FXS, l'information indiquant si l'interface de communication a reçu une commande d'alimentation électrique de la ligne téléphonique analogique ou non. Si oui, le procédé passe au bloc B. Sinon, le procédé passe au bloc C.

Contrairement au bloc A, qui reflète une situation normale, les blocs B et C reflètent deux situations anormales à des degrés différents.

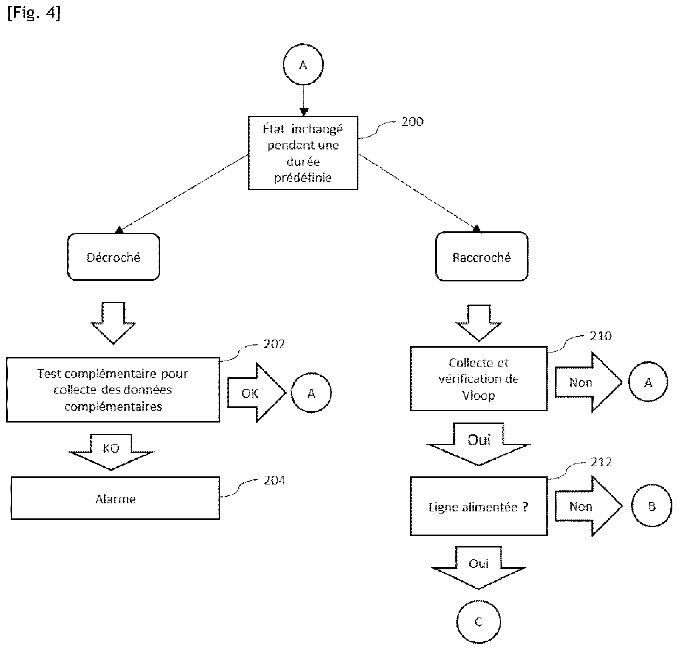

On va maintenant détailler le traitement de test cyclique matérialisé par le bloc A sur la figure 3. Ce traitement de test cyclique comprend les étapes suivantes, représentées sur la figure 4.

Dans une étape 200, le processeur 4 détecte que l'état du port FXS (état raccroché ou état décroché) se maintient pendant une durée prédéfinie. La durée prédéfinie peut être supérieure à une heure, voire supérieure à 6 heures, voire supérieure à 12 heures, voire supérieure à 24 heures. Dans tous les cas, la durée prédéfinie est largement supérieure à la période de lecture du booléen indicatif de cet état.

Si le processeur 4 détecte que le port FXS se maintient à l'état décroché pendant la durée prédéfinie, alors le processeur 4 passe à l'étape 202.

Dans l'étape 202, le processeur 4 commande un test complémentaire sur la ligne téléphonique analogique, de sorte à collecter les données de diagnostic complémentaires, conformément à l'étape 106 décrite plus haut.

Dans l'étape 202, le processeur 4 vérifie par ailleurs si ces données de diagnostic complémentaires révèlent un défaut dans le réseau téléphonique analogique ou non. Un tel défaut peut se rencontrer au niveau du port FXS, au niveau du téléphone analogique, ou au niveau de la ligne téléphonique analogique entre les deux.

Si les données de diagnostic révèlent un défaut dans le réseau téléphonique analogique, le processeur 4 met en œuvre une étape 204 d'émission d'une alarme, pouvant être identique à l'étape 108.

Si les données de diagnostic ne révèlent pas de défaut dans le réseau téléphonique analogique, alors le processeur 4 retourne au bloc A. Les étapes décrites précédemment pourront alors être à nouveau mise en œuvre sur détection d'un maintien de l'état pendant la durée prédéfinie.

Si le processeur 4 détecte à l'étape 200 que le port FXS se maintient à l'état raccroché pendant la durée prédéfinie, alors le processeur 4 met en œuvre des étapes 210, 212 identiques aux étapes 110 et 112 selon la même logique et les mêmes conséquences que dans le cas de détection d'un raccrochage décrit précédemment. La mise en œuvre des étapes 210, 212 peut ainsi aboutir au bloc A, B ou C selon le cas.

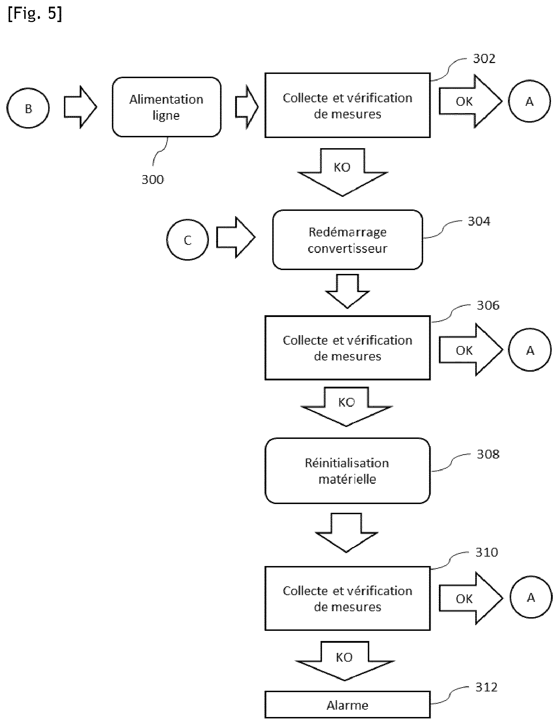

On va maintenant détailler les étapes mises en œuvre par le processeur 4 lorsque le procédé est au bloc B en référence à la figure 5 (on rappelle que cette situation survient si le processeur 4 arrive à la conclusion que le port FXS n'a pas reçu de commande d'alimentation pour alimenter la ligne téléphonique analogique).

Dans cette situation, le processeur 4 commande le port FXS de sorte que port FXS alimente la ligne téléphonique analogique (étape 300). A cet effet, le processeur passe au port FXS une commande d'alimentation appropriée.

Ensuite, dans une étape 302, le processeur 4 collecte de nouvelles mesures pour les grandeurs physiques discutées précédemment, puis vérifie la correspondance de chaque nouvelle mesure avec une valeur nominale. Ainsi, l'étape 302 correspond aux étapes 102 et 104 représentées en figure 1.

Si la vérification réalisée lors de l'étape 302 révèle que toutes les nouvelles mesures ont des valeurs nominales, alors le procédé passe au bloc A (situation normale). Si la vérification révèle qu'au moins une des nouvelles mesures n'a pas une valeur nominale, alors le procédé passe à l'étape 304.

A l'étape 304, le processeur 4 commande un redémarrage du convertisseur du port FXS, en utilisant une commande appropriée.

Ensuite, dans une étape 306, le processeur 4 collecte des nouvelles mesures pour les grandeurs physiques discutées précédemment, puis vérifie la correspondance de chaque nouvelle mesure avec une valeur nominale. Cette étape est identique à l'étape 302.

Si la vérification révèle que toutes les nouvelles mesures ont des valeurs nominales, alors le procédé passe au bloc A (situation normale). Si la vérification révèle qu'au moins une des nouvelles mesures n'a pas une valeur nominale, alors le procédé passe à l'étape 308.

A l'étape 308, le processeur 4 commande une réinitialisation matérielle du port FXS (« hard reset » en anglais). Le processeur 4 peut également mettre en œuvre redémarrer le programme qu'il exécute, ou tout du moins un module du programme utilisant le port FXS, par exemple un module de gestion de communication entre le réseau téléphonique et un service VOIP accessible via le réseau numérique.

Ensuite, dans une étape 310, le processeur 4 collecte des nouvelles mesures pour les grandeurs physiques discutées précédemment, puis vérifie la correspondance de chaque nouvelle mesure avec une valeur nominale. Cette étape est identique à l'étape 302.

Si la vérification révèle que toutes les nouvelles mesures ont des valeurs nominales, alors le procédé passe au bloc A (situation normale). Si la vérification révèle qu'au moins une des nouvelles mesures n'a pas une valeur nominale, alors le processeur 4 émet une alarme dans une étape 312 (pouvant être identique à l'étape 108).

On va maintenant détailler les étapes mises en œuvre par le processeur 4 lorsque le procédé est au bloc C (on rappelle que cette situation survient si le processeur 4 arrive à la conclusion que le port FXS a reçu une commande d'alimentation pour alimenter la ligne téléphonique analogique).

Dans ce cas, le procédé passe directement à l'étape de redémarrage du convertisseur 304, puis met en œuvre les étapes postérieures à l'étape de redémarrage du convertisseur décrites dans le cas B.

On va maintenant détailler un exemple de mise en œuvre du procédé avec des valeurs nominales trouvant par exemple application en France.

Le FXS est configuré pour fournir une tension au repos de 47 Volts et un courant en décroché de 36 mA. Les offset VOV_GND et VOV_BAT sont réglés à 5,25 Volts.

Sur détection d'un décrochage, le processeur 4 collecte les mesures suivantes : Vbat = 26,83 Volts, Vtip = 5.47 Volts, Vring = 22.46 Volts.

Ici, Vbat semble correct puisque Vbat > Vtip, mais on remarque qu'on n'a pas la relation Vbat = Vtip+ VOV_BAT.

Le processeur 4 vérifie ensuite les autres mesures. Il constate que :

- Vloop = Vtip - Vring = 19,99 Volts (ce qui est différent de 0 Volt).
- Iloop = 35,46 mA ; avec une tolérance de 5%, on a bien le courant de boucle prédéfini (36 mA).
- Ilong = 0,31 mA ; avec une marge d'erreur, cette valeur peut être considérée comme nulle.

On est ainsi dans une situation où toutes les mesures collectées ont des valeurs nominales ; le procédé passe donc au traitement cyclique (bloc A). Après avoir attendu la durée prédéfinie, le processeur 4 constate que le port FXS s'est maintenu dans l'état décroché. Le processeur 4 met alors en oeuvre le test complémentaire. En particulier, le test #3 « Receiver Off-Hook » indique que l'état décroché perçu par le port FXS n'est pas provoqué par un téléphone analogique. Dans ces conditions, le processeur 4 met en œuvre le test #2, permettant ainsi de collecter les impédances suivantes :

- Impédance entre le fil TIP et la masse : 2000000 ohms
- Impédance entre le fil RING et la masse : 2000000 ohms
- Impédance entre les fils TIP et RING : 220 ohms.

Ces valeurs révèlent l'existence d'un défaut, car l'impédance mesurée entre les fils TIP et RING est inférieure à celle d'un poste ordinaire en état de fonctionnement (impédance comprise entre 400 et 600 ohms). L'alarme est donc déclenchée.

Le processeur 4 est capable d'exécuter des instructions chargées dans la mémoire 8 à partir d'une mémoire « Read Only Memory » ou « ROM », d'une mémoire externe (telle qu'une carte mémoire telle qu'une carte "Secure Digital" ou "SD"), d'un support de stockage (tel qu'un disque dur), ou d'un réseau de communication. Lors de la mise sous tension du dispositif 1, le processeur 4 est capable de lire dans la mémoire 8 des instructions et de les exécuter. Ces instructions forment un programme d'ordinateur causant la mise en œuvre, par le processeur 4, de tout ou partie des comportements, traitements, algorithmes et étapes décrits ici.

Ainsi, tout ou partie des algorithmes, traitements et étapes décrits ici peut être implémenté sous forme logicielle par exécution d'un ensemble d'instructions par une machine programmable, telle un DSP (« Digital Signal Processor » en anglais) ou un microcontrôleur ou un processeur. Tout ou partie des algorithmes, traitements et étapes décrits ici peut aussi être implémenté sous forme matérielle, ou sous forme de la combinaison d'une forme matérielle et d'une forme logicielle, par une machine ou un composant (« chip » en anglais), tel qu'un FPGA (« Field-Programmable Gate Array » en anglais) ou un ASIC (« Application-Specific Integrated Circuit » en anglais). Ainsi, le dispositif 1 comporte de la circuiterie électronique adaptée et configurée pour implémenter les comportements, traitements, algorithmes et étapes décrits ici.

## Revendications

1. Procédé de test d'une interface de communication connectée à une ligne téléphonique analogique comprenant deux fils électriques, le procédé comprenant les étapes suivantes :

• détection (100) d'un changement d'état de l'interface de communication entre un état décroché et un état raccroché ;
• s'il est détecté que le changement d'état va de l'état raccroché à l'état décroché, collecte de mesures acquises par l'interface de communication, les mesures se rapportant à au moins une des grandeurs physiques suivantes :

• une tension fournie (Vbat) par un convertisseur de l'interface de communication,

• une tension (Vloop) entre les deux fils électriques,

• une intensité d'un courant de boucle (Iloop) circulant l'un des deux fils électriques,

• une intensité d'un courant de fuite (Ilong) depuis l'un des deux fils électriques vers une masse de l'interface de communication ;

• vérification (102, 104) de correspondance des mesures avec des valeurs nominales respectives ;

• si la vérification révèle que toutes les mesures ont des valeurs nominales, mise en oeuvre d'un traitement comprenant les étapes suivantes:

• détection (200) d'un maintien de l'état de l'interface de communication pendant un durée prédéfinie ;

• s'il est détecté que l'interface de communication se maintient à l'état décroché pendant la durée prédéfinie, commande (202) d'un test complémentaire sur la ligne téléphonique par l'interface de communication, de sorte à collecter des données de diagnostic complémentaires aux mesures ;

• si les données de diagnostic complémentaires révèlent un défaut dans le réseau téléphonique analogique, émission (204) d'une alarme ;

• si les données de diagnostic complémentaires ne révèlent pas de défaut sur la ligne téléphonique analogique, répétition du traitement.

2. Procédé selon la revendication précédente, comprenant en outre les étapes suivantes :

• si la vérification révèle qu'au moins une mesure parmi la tension (Vloop) entre les deux fils électriques, l'intensité du courant de boucle (Iloop) et l'intensité du courant de fuite (Ilong) n'a pas une valeur nominale, commande (202) du test complémentaire sur la ligne téléphonique par l'interface de communication, de sorte à obtenir les données de diagnostic complémentaires aux mesures, et émission de l'alarme si les données de diagnostic révèlent un défaut dans le réseau téléphonique analogique.

3. Procédé selon l'une quelconque des revendications précédentes, comprenant les étapes suivantes mises en œuvre si est détecté que le changement d'état va de l'état décroché à l'état raccroché ou si l'interface de communication se maintient dans l'état raccroché,

• collecte d'une tension (Vloop) entre les deux fils électriques acquise par l'interface de communication ;

• vérification (110, 210) de la tension (Vloop) entre les deux fils électriques, de sorte à déterminer si la tension collectée a une valeur nominale ;

• si la tension (Vloop) entre les deux fils électriques a une valeur nominale, mise en œuvre du traitement ;

• si la tension (Vloop) entre les deux fils électriques n'a pas une valeur nominale, accès (112) à une information mémorisée par l'interface de communication, l'information indiquant si l'interface de communication a reçu une commande d'alimentation électrique de la ligne téléphonique analogique ou non ;

• si l'information indique que l'interface de communication n'a pas reçu de commande d'alimentation, alors commande (300) de l'interface de communication de sorte que l'interface de communication alimente la ligne téléphonique analogique ;

• si l'information indique que l'interface de communication a reçu une commande d'alimentation, commande (304) de redémarrage du convertisseur.

4. Procédé selon la revendication précédente, comprenant en outre les étapes suivantes mises en œuvre après la commande de l'interface de communication de sorte que l'interface de communication alimente la ligne téléphonique analogique :

• collecte de nouvelles mesures acquises par l'interface de communication, les nouvelles mesures se rapportant à au moins une des grandeurs physiques ;

• vérification (302) de correspondance des nouvelles mesures avec les valeurs nominales respectives ;

• si la vérification de correspondance des nouvelles mesures révèle que toutes les nouvelles mesures ont des valeurs nominales, mise en œuvre du traitement ;

• si la vérification de correspondance des nouvelles mesures révèle qu'au moins une des nouvelles mesures n'a pas une valeur nominale, commande (304) de redémarrage du convertisseur.

5. Procédé selon l'une quelconque des revendications 3 et 4, comprenant en outre les étapes suivantes mises en œuvre après la commande (304) de redémarrage du convertisseur :

• répétition (306) des étapes de collecte et de vérification de nouvelles mesures ;
• si la répétition (306) des étapes de collecte et de vérification de nouvelles mesures révèle que toutes les nouvelles mesures ont des valeurs nominales, mise en œuvre du traitement ;
• si la répétition (306) révèle qu'une nouvelle mesure n'a pas une valeur nominale, commande (308) de réinitialisation matérielle de l'interface de communication.

6. Procédé selon la revendication précédente, comprenant en outre les étapes suivantes mises en œuvre après la commande de réinitialisation matérielle de l'interface de communication :

• deuxième répétition (308) des étapes de collecte et de vérification de nouvelles mesures ;
• si la deuxième répétition (308) révèle que toutes les nouvelles mesures ont des valeurs nominales, mise en œuvre du traitement ;
• si la deuxième répétition (306) révèle qu'une nouvelle mesure n'a pas une valeur nominale, émission (312) d'une alarme.

7. Procédé selon l'une quelconque des revendications précédentes, dans lequel le test complémentaire comprend au moins un test défini par la norme GR-909.

8. Produit programme d'ordinateur comprenant des instructions de code de programme pour l'exécution des étapes du procédé selon l'une quelconque des revendications précédentes, lorsque ce programme est exécuté par un processeur (4).

9. Dispositif (1), par exemple une passerelle d'accès à internet, comprenant :

• une interface de communication (2) propre à être connectée à une ligne téléphonique analogique comprenant deux fils électriques (TIP, RING) ;
• un processeur (4) configuré pour tester l'interface de communication (2) à l'aide du procédé selon l'une quelconque des revendications 1 à 7.

**Patentansprüche**

1. Verfahren zum Testen einer an eine analoge Fernsprechleitung angeschlossenen Kommunikationsschnittstelle, die zwei elektrische Kabel umfasst, wobei das Verfahren die folgenden Schritte umfasst:

• Detektieren (100) einer Zustandsänderung der Kommunikationsschnittstelle zwischen einem abgehobenen Zustand und einem aufgehängten Zustand;
• falls detektiert wird, dass die Zustandsänderung von dem aufgehängten Zustand in den abgehobenen Zustand übergeht, Erheben von Messungen, die durch die Kommunikationsschnittstelle erfasst werden, wobei die Messungen mindestens eine der folgenden physikalischen Größen betreffen:

• eine Spannung (Vbat), die von einem Umsetzer der Kommunikationsschnittstelle bereitgestellt wird,
• eine Spannung (Vloop) zwischen den beiden elektrischen Kabeln,
• eine Intensität eines Schleifenstroms (Iloop), der in einem der beiden elektrischen Kabel fließt,
• eine Intensität eines Leckstroms (Ilong) von einem der beiden elektrischen Kabel zu einer Masse der Kommunikationsschnittstelle;

• Überprüfen (102, 104) einer Übereinstimmung der Messungen mit jeweiligen Nennwerten;
• falls die Überprüfung ergibt, dass alle Messungen Nennwerte aufweisen, Umsetzen einer Bearbeitung, die folgenden Schritte umfasst:

• Detektieren (200) einer Bewahrung des Zustands der Kommunikationsschnittstelle während einer vordefinierten Dauer;
• falls detektiert wird, dass die Kommunikationsschnittstelle während der vordefinierten Dauer in dem abgehobenen Zustand bleibt, Befehlen (202) eines ergänzenden Tests an der Fernsprechleitung durch die Kommunikationsschnittstelle, so dass Diagnosedaten erhoben werden, welche die Messungen ergänzen;
• falls die ergänzenden Diagnosedaten einen Defekt in dem analogen Fernsprechnetz ergeben, Auslösen (204) eines Alarms;
• falls die ergänzenden Diagnosedaten keinen Defekt auf der analogen Fernsprechleitung ergeben, Wiederholen der Bearbeitung.

2. Verfahren nach dem vorhergehenden Anspruch, ferner umfassend die folgenden Schritte:

• falls die Überprüfung ergibt, dass mindestens eine Messung aus der Spannung (Vloop) zwischen den beiden elektrischen Kabeln, der Intensität des Schleifenstroms (Iloop) und der Intensität des Leckstroms (Ilong) keinen Nennwert aufweist, Befehlen (202) des ergänzenden Tests auf der Fernsprechleitung durch die Kommunikationsschnittstelle, so dass die Diagnosedaten erzielt werden, welche die Messungen ergänzen, und Auslösen des Alarms, falls die Diagnosedaten einen Defekt in dem analogen Fernsprechnetz ergeben.

3. Verfahren nach einem der vorhergehenden Ansprüche, umfassend die folgenden Umsetzungsschritte, falls detektiert wird, dass die Zustandsänderung von dem abgehobenen Zustand in den aufgehängten Zustand übergeht, oder falls die Kommunikationsschnittstelle im aufgehängten Zustand bleibt,

• Erheben einer Spannung (Vloop) zwischen den beiden elektrischen Kabeln, die durch die Kommunikationsschnittstelle erfasst wird;
• Überprüfen (110, 210) der Spannung (Vloop) zwischen den beiden elektrischen Kabeln, so dass bestimmt wird, ob die erhobene Spannung einen Nennwert aufweist;
• falls die Spannung (Vloop) zwischen den beiden elektrischen Kabeln einen Nennwert aufweist, Umsetzen der Bearbeitung;
• falls die Spannung (Vloop) zwischen den beiden elektrischen Kabeln keinen Nennwert aufweist, Zugreifen (112) auf eine Information, die von der Kommunikationsschnittstelle gespeichert wird, wobei die Information angibt, ob die Kommunikationsschnittstelle einen Befehl zur elektrischen Versorgung der analogen Fernsprechleitung empfangen hat oder nicht;
• falls die Information angibt, dass die Kommunikationsschnittstelle keinen Befehl zur elektrischen Versorgung empfangen hat, dann Steuern (300) der Kommunikationsschnittstelle, so dass die Kommunikationsschnittstelle die analoge Fernsprechleitung versorgt;
• falls die Information angibt, dass die Kommunikationsschnittstelle einen Befehl zur elektrischen Versorgung empfangen hat, Befehlen (304) eines Neustarts des Umsetzers.

4. Verfahren nach dem vorhergehenden Anspruch, ferner umfassend die folgenden Schritte, die nach dem Steuern der Kommunikationsschnittstelle, so dass die Kommunikationsschnittstelle die analoge Fernsprechleitung versorgt, umgesetzt werden:

• Erheben von neuen Messungen, die durch die Kommunikationsschnittstelle erfasst werden, wobei die neuen Messungen mindestens eine der physikalischen Größen betreffen;
• Überprüfen (302) der Übereinstimmung der neuen Messungen mit den jeweiligen Nennwerten;
• falls das Überprüfen der Übereinstimmung der neuen Messungen ergibt, dass alle neuen Messungen Nennwerte aufweisen, Umsetzen der Bearbeitung;
• falls das Überprüfen der Übereinstimmung der neuen Messungen ergibt, dass mindestens eine der neuen Messungen keinen Nennwert aufweist, Befehlen (304) des Neustarts des Umsetzers.

5. Verfahren nach einem der Ansprüche 3 und 4, ferner umfassend die folgenden Schritte, die nach dem Befehlen (304) des Neustarts des Umsetzers umgesetzt werden:

• Wiederholen (306) der Schritte des Erhebens und Überprüfens von neuen Messungen;
• falls das Wiederholen (306) der Schritte des Erhebens und Überprüfens von neuen Messungen ergibt, dass alle neuen Messungen Nennwerte aufweisen, Umsetzen der Bearbeitung;
• falls das Wiederholen (306) ergibt, dass eine neue Messung keinen Nennwert aufweist, Befehlen (308) einer Hardware-Neuinitialisierung der Kommunikationsschnittstelle.

6. Verfahren nach dem vorhergehenden Anspruch, ferner umfassend die folgenden Schritte, die nach dem Befehlen der Hardware-Neuinitialisierung der Kommunikationsschnittstelle umgesetzt werden:

• zweites Wiederholen (308) der Schritte des Erhebens und Überprüfens von neuen Messungen;
• falls das zweite Wiederholen (308) ergibt, dass alle neuen Messungen Nennwerte aufweisen, Umsetzen der Bearbeitung;
• falls das zweite Wiederholen (306) ergibt, dass eine neue Messung keinen Nennwert aufweist, Auslösen (312) eines Alarms.

7. Verfahren nach einem der vorhergehenden Ansprüche, wobei der ergänzende Test mindestens einen Test umfasst, der durch die Norm GR-909 definiert ist.

8. Computerprogrammprodukt, umfassend Programmcodeanweisungen zum Ausführen der Verfahrensschritte nach einem der vorhergehenden Ansprüche, wenn dieses Programm von einem Prozessor (4) ausgeführt wird.

9. Vorrichtung (1), zum Beispiel ein Internet-Gateway, umfassend:

• eine Kommunikationsschnittstelle (2), die dazu geeignet ist, an eine analoge Fernsprechleitung angeschlossen zu sein, die zwei elektrische Kabel (TIP, RING) umfasst;
• einen Prozessor (4), der dazu konfiguriert ist, die Kommunikationsschnittstelle (2) anhand des Verfahrens nach einem der Ansprüche 1 bis 7 zu testen.

**Claims**

1. A method for testing a communication interface connected to an analog telephone line comprising two electrical wires, the method comprising the following steps:

• detecting (100) a change of state of the communication interface between an off-hook state and an on-hook state;
• if it is detected that the change of state switches from the on-hook state to the off-hook state, collecting measurements acquired by the communication interface, the measurements relating to at least one of the following physical quantities:

• a voltage provided (Vbat) by a converter of the communication interface,
• a voltage (Vloop) between the two electrical wires,
• an intensity of a loop current (Iloop) flowing in one of the two electrical wires,
• an intensity of a leakage current (Ilong) from one of the two electrical wires to a ground of the communication interface;

• verifying (102, 104) matching of the measurements to respective nominal values;
• if verifying the matching reveals that all the measurements have nominal values, implementing a processing operation comprising the following steps:

• detecting (200) a maintenance of the state of the communication interface for a predefined duration;
• if it is detected that the communication interface is maintained in the off-hook state for the predefined duration, ordering (202) a complementary test on the telephone line by the communication interface, so as to collect diagnostic data complementary to the measurements;
• if the complementary diagnostic data reveal a fault in the analog telephone network, issuing (204) an alarm;
• if the complementary diagnostic data do not reveal a fault on the analog telephone line, repeating the processing operation.

2. The method according to the preceding claim, further comprising the following steps:

• if verifying the matching reveals that at least one measurement among the voltage (Vloop) between the two electrical wires, the intensity of the loop current (Iloop) and the intensity of the leakage current (Ilong) does not have a nominal value, ordering (202) the complementary test on the telephone line by the communication interface, so as to obtain the diagnostic data complementary to the measurements, and issuing the alarm if the diagnostic data reveal a fault in the analog telephone network.

3. The method according to any one of the preceding claims, comprising the following steps implemented if it is detected that the change of state switches from the off-hook state to the on-hook state or if the communication interface is maintained in the on-hook state,

• collecting a voltage (Vloop) between the two electrical wires acquired by the communication interface;

• verifying (110, 210) the voltage (Vloop) between the two electrical wires, so as to determine whether the collected voltage has a nominal value;

• if the voltage (Vloop) between the two electrical wires has a nominal value, implementing the processing operation;

• if the voltage (Vloop) between the two electrical wires does not have a nominal value, accessing (112) a piece of information stored by the communication interface, the piece of information indicating whether or not the communication interface has received a power supply order for the analog telephone line;

• if the piece of information indicates that the communication interface has not received a power supply order, then ordering (300) the communication interface so that the communication interface supplies the analog telephone line;

• if the piece of information indicates that the communication interface has received a power supply order, ordering (304) the restart of the converter.

4. The method according to the preceding claim, further comprising the following steps implemented after the order of the communication interface so that the communication interface supplies the analog telephone line:

• collecting new measurements acquired by the communication interface, the new measurements relating to at least one of the physical quantities;

• verifying (302) the matching of the new measurements with the respective nominal values;

• if the verification of the matching of the new measurements reveals that all the new measurements have nominal values, implementing the processing operation;

• if the verification of the matching of the new measurements reveals that at least one of the new measurements does not have a nominal value, ordering (304) the restart of the converter.

5. The method according to any one of claims 3 and 4, further comprising the following steps implemented after the converter restart order (304):

• repeating (306) the steps of collecting and verifying new measurements;

• if the repetition (306) of the steps of collecting and verifying new measurements reveals that all the new measurements have nominal values, implementing the processing operation;

• if the repetition (306) reveals that a new measurement does not have a nominal value, ordering (308) a hard reset of the communication interface.

6. The method according to the preceding claim, further comprising the following steps implemented after ordering the hard reset of the communication interface:

• repeating (308) a second time the steps of collecting and verifying new measurements;

• if the second repetition (308) reveals that all the new measurements have nominal values, implementing the processing operation;

• if the second repetition (306) reveals that a new measurement does not have a nominal value, issuing (312) an alarm.

7. A method according to any one of the preceding claims, wherein the complementary test comprises at least one test defined by standard GR-909.

8. A computer program product comprising program code instructions for the execution of the steps of the method according to any one of the preceding claims, when this program is executed by a processor (4).

9. A device (1), for example an internet access gateway, comprising:

• a communication interface (2) suitable to be connected to an analog telephone line comprising two electrical wires (TIP, RING);

• a processor (4) configured to test the communication interface (2) using the method according to any one of claims 1 to 7.

[Fig. 1]

[Fig. 2]

[Fig. 3]

Détection de
changement d'état — 100

Décrochage

Raccrochage

Collecte et vérification
d'une mesure de tension
Vbat — 102

KO ▷ C

Collecte et
vérification de
Vloop — 110

OK ▷ A

OK

KO

Collecte et vérification de
mesures pour
Vloop, I loop, Ilong — 104

OK ▷ A

Ligne alimentée ? — 112

Non ▷ B

KO

Oui

Test complémentaire pour
collecte des données
complémentaires — 106

C

Alarme — 108

[Fig. 4]

[Fig. 5]

```
  B  ⇨  ┌─────────────┐  ⇨  ┌─────────────────┐  ⟩OK⟩  A
         │ Alimentation│      │ Collecte et     │         302
         │    ligne    │      │ vérification    │
         └─────────────┘      │ de mesures      │
              │               └─────────────────┘
             300                      ⇩ KO

  C  ⇨  ┌─────────────────┐  304
         │  Redémarrage    │
         │  convertisseur  │
         └─────────────────┘
                  ⇩
         ┌─────────────────┐  ⟩OK⟩  A
         │ Collecte et     │         306
         │ vérification    │
         │ de mesures      │
         └─────────────────┘
                  ⇩ KO
         ┌─────────────────┐  308
         │ Réinitialisation│
         │   matérielle    │
         └─────────────────┘
                  ⇩
         ┌─────────────────┐  ⟩OK⟩  A
         │ Collecte et     │         310
         │ vérification    │
         │ de mesures      │
         └─────────────────┘
                  ⇩ KO
         ┌─────────────────┐  312
         │     Alarme      │
         └─────────────────┘
```

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2009034690 A1
- US 6438212 B1